Europäisches Patentamt

European Patent Office

Office européen des brevets

(11) Veröffentlichungsnummer: **0 616 207 A2**

## (12) EUROPÄISCHE PATENTANMELDUNG

(21) Anmeldenummer: **94100393.1**

(51) Int. Cl.5: **G01N 21/35**, G08B 17/103

(22) Anmeldetag: **13.01.94**

(30) Priorität: **21.01.93 DE 4301457**

(43) Veröffentlichungstag der Anmeldung:
**21.09.94 Patentblatt 94/38**

(84) Benannte Vertragsstaaten:
**AT BE CH DE DK ES FR GB IT LI LU NL PT SE**

(71) Anmelder: **I.T.V.I. INTERNATIONAL TECHNO VENTURE INVEST AG**
**Austrasse 52**
**FL-9490 Vaduz (LI)**

(72) Erfinder: **Hanns, Rump**
**Biesenkamp 22**
**D-59427 Unna (DE)**
Erfinder: **Pieper, Norbert**
**Königsberger Strasse 3**
**D-59379 Selm (DE)**
Erfinder: **Hiller, Jörg**
**Am Bollwerk 20**
**D-58300 Wetter (DE)**
Erfinder: **Zacheja, Johannes, Dr.**
**Schulstrasse 59**
**D-27412 Bülstedt (DE)**
Erfinder: **Gadet, Jean-Louis**
**105 rue Leblanc**
**F-75015 Paris Frankreich (FR)**
Erfinder: **Horstick, Ulrich**
**Im Kolk 5**
**D-4423 Gescher (DE)**

(54) **Detektor für brennbare Gase insbesondere Methan.**

(57) Die Erfindung beschreibt einen Apparat und ein Verfahren, mit dem Detektoren zur Erkennung der Anwesenheit gefährlicher Konzentrationen von z. B. Methan hergestellt werden können. Das Verfahren gewährleistet einen selektiven Nachweis und basiert auf der Eigenschaft mehratomiger Gase, Lichtquanten mit Energien im Infrarot-Bereich zu absorbieren, wobei die Signalauswertung insbesondere die Verteilung der Signale auf der Zeitachse zur Erkennung gefährlicher Konzentrationen ausgenutzt wird.

Fig. 1

Fig. 10

Es besteht der Wunsch, brennbare oder explosionsfähige Gase wie z.B. das im Erdgas enthaltene Methan zu detektieren.

Dabei soll beieiner Konzentration größer als ein bestimmter Wert - der sich allerdings im sicheren Abstand von der sogenannten Explosionsgrenze befindet (z. B. etwa bei 1 Volumenprozent Methan in Luft) - ein Signal ausgelöst werden.

Mit diesem Signal könnte z. B. die Gaszufuhr unterbrochen werden. Ferner könnte die elektrische Anlage ausgeschaltet und/oder ein Alarmsignal ausgelöst werden. In der bevorzugten Ausführung wird erwartet, daß der Detektor selektiv gegenüber Methan mißt. Keine Querempfindlichkeit soll gegeben sein gegenüber Gasen wie z.B. Kohlenmonoxid,Dämpfen von Alkohol, Benzin, Lösungsmitteln usw. Eine Langzeitstabilität soll über einen Zeitraum von bis zu 10 Jahren gewährleistet sein, wobei vorzugsweise Batteriebetrieb angestrebt wird. Bedeutsam ist auch, daß ohne Risiken für den Detektor siliconhaltige Reinigungsmittel in der Umgebung zugelassen werden dürfen.

Für derartige Anwendungen sind zahlreiche Sensorprinzipien zur Herstellung derartiger Detektoren bekannt.

Zum einen sind Zinndioxid-Halbleitersensoren seit vielen Jahren bekannt und gelten als besonders zuverlässig. Allerdings ist der in der gegebenen Applikation relativ hohe Leistungsbedarf von ca. 1 Watt außerordentlich problematisch, da Batteriebetrieb angestrebt wird. Im übrigen sind Zinndioxid-Gassensoren unspezifisch und reagieren auf alle brennbaren Gase. Weiter bekannt sind Wärmetönungs-Sensoren. Auch hier ist anzumerken, daß ein relativ hoher Leistungsbedarf besteht und daß ebenfalls keine Selektivität gegenüber Methan erzielbar ist. Vielmehr ist auch hier der Sensor quer.empfindlich gegenüber allen brennbaren Gasen.

Ein weiteres Kriterium ist die Unempfindlichkeit gegenüber Siliconen. Sowohl Zinndioxid-Sensoren als auch Wärmetönungs-Sensoren bilden eine gasundurchlässige Schicht aus Silikat auf der gasaktiven Oberfläche, wenn siliconhaltige Dämpfe angeboten werden.

Die Silikatablagerung führt zu einer dramatischen Verringerung der Empfindlichkeit, ohne daß dies an sonstigen Sensorparametern ohne weiteres erkennbar ist. Im schlechtesten Falle ist der Sensor vollkommen unempfindlich geworden, ohne daß die statischen Parameter wie Heizungswiderstand und Sensorwiderstand sich verändert hätten.

Um die Selektivität zu verbessern ist von verschiedenen Seiten versucht worden, eine Kombination von mehreren etwas unterschiedlichen Sensoren gleichzeitig auszuwerten.

Wenn z.B. durch etwas unterschiedliche Dotierung der Sensor-elemente oder etwas unterschiedliche Oberflächentemperatur der Sensorelemente die Empfindlichkeit gegenüber verschiedenen Zielgasen etwas unterschiedlich gemacht wird, ergibt sich für die jeweiligen Zielgase ein spezifisches Muster in der Reaktion der einzelnen Sensorelemente auf das Zielgas. Diesbezüglich sind recht gute Ergebnisse erzielt worden, ohne daß jedoch von absoluter Selektivität gesprochen werden kann.

Vor allen Dingen ist die Langzeitstabilität aus heutiger Sicht eine absolut unbeantwortete Frage. Vielmehr müssen diese Anordnungen regelmäßig nachkalibriert werden.

Ein weiterer Nachteil ist, daß durch die mehrfache Anordnung von Sensorelementen selbstverständlich auch der Energiebedarf weiter ansteigt, was für die geforderte Applikation ein erheblicher Nachteil ist.

Weiter werden elektrochemische Zellen angeboten, die hinreichend selektiv auf Methan reagieren. Auch wenn von einer absoluten Selektivität nicht gesprochen werden kann, ist die Selektivität weitaus größer und auch stabiler als die bei vorstehend diskutierten Anordnungen. Nachteilig ist, daß der Temperaturbereich derartiger Gasmeßzellen eingeschränkt ist und daß die Lebensdauer dieser Zellen z. Zt. relativ gering ist und sich im Zeitraum von max. 2 Jahren bewegt. Da diese Zellen relativ kostenintensiv sind, entstehen beim Einsatz von Detektoren die mit Hilfe von chemischen Gasmeßzellen aufgebaut sind erhebliche Kosten durch die technische Überprüfung bzw. durch den Austausch der Meßzellen. Aus diesem Grunde haben sich derartige Meßzellen durchaus dort etabliert, wo eine ständige Überwachung gewährleistet ist und wo Kostengesichtspunkte nich dominant sind. (Bergbau, chemische Industrie, Botrol-Industrie).

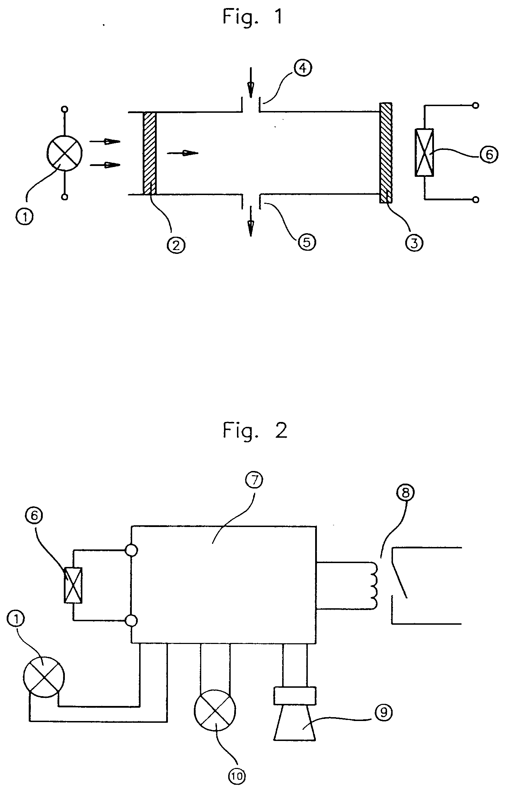

Als weiteres Sensorprinzip ist die Infrarot-Absorbtion-Analyse bekannt. Dabei wir die Tatsache usgenutzt, daß bei Anwesenheit des Zielgases ein bestimmter Spektralbereich des Lichtes deutlich gedämpft wird. Prinzipiell sind derartige Detektoren, wie in Figur 1 systematisch dargestellt, aufgebaut:

Eine Infrarotquelle (1) erzeugt Strahlungsenergie im nachgefragten Spektrum, welches sich bei Methan auf der Wellenlänge von 3,31 Mikrometern befindet. Ein optisches Filter (2) läßt ausschließlich diesen Spektralbereich hindurch und unterdrückt die Reststrahlung. Die eigentliche Gasmeßkammer (4) enthält Luft und ggf. das zu untersuchende Zielgas. Die Kammer wird abgeschlossen durch ein weiteres Filter (3).

Dahinter ist ein Strahlungssensor für vorzugs.weise infrarote Strahlung angebracht (6), welcher die Strahlungsleistung in elektrische Signale umwandelt. (Hier sind verschiedene Prinzipien bekannt, die im Zusammenhang der nachfolgenden Überlegungen allerdings als gleichrangig behandelt werden und insofern nicht näher erwähnt werden.)

Problematisch bei Infrarot-Detektoren ist die Tatsache, daß grundsätzlich nur bei Temperaturen nahe dem absoluten Nullpunkt keine Infrarotstrahlung empfangen werden kann. Daraus folgt, daß ein nicht unbeträchtlicher Einfluß der Umgebungstemperatur sowohl den Nullpunkt (keine Anwesenheit des Zielgases) als auch die Meßwerte erheblich verfälschen kann.

Die hier beschriebene Erfindung beschreibt einen vorteilhaften Weg, die an sich ideale Detektionsmethode nach dem Infrarot-Absorptionsprinzip zu nutzen und dabei die Drifterscheinungen zu kompensieren, ohne dabei die Kosten so zu erhöhen, daß das Produkt in der geforderten Anwendung nicht mehr wirtschaftlich vertretbar wäre.

Erfindungsgemäß werden dazu einige grundsätzliche Überlegungen angestellt. Insbesondere der Einsatzfall wird untersucht und seine Besonderheiten in Bezug auf übliche Meßmethodn werden diskutiert. Dabei wird gefunden, daß die Bedingungen in der gestellten Aufgabe sich von üblichen Meßgeräte-Bedingungen deutlich unterscheiden.

Bei einem üblichen Meßgerät wird vorausgesetzt, daß es stets ein Meßsignal zur Verfügung stellt, welches nach einer bestimmten Regel der Konzentration des angebotenen Zielgases entspricht.

Dabei ist unerheblich, wieviel Zielgas in welcher Konzentration und wie lange angeboten wird. Der nachgefragte "Gas-Schutzschalter" dagegen wird im Normalfall niemals eine derartig hohe Methankonzentration aufzuspüren haben. Eine derartige Methankonzentration muß als Ausnahmefall bezeichnet werden.

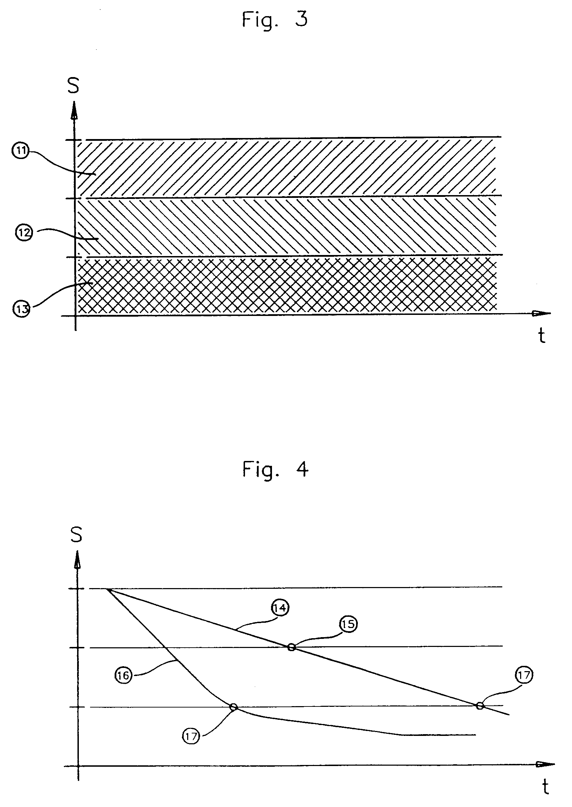

Betrachtet man die Intensität der Strahlung nach Durchstrahlen der Meßstrece, kann man diese unschwer in 3 Zonen einteilen. Figur 3 zeigt diese Aufteilung. Die erste Zone (11) zeigt das Detektorsignal, ohne daß durch Einwirkung des Zielgases eine Dämpfung stattgefunden hat. Durch Einfluß anderer Strahlungsquellen im Bereich der üblichen Temperaturschwankungen zwischen z. B. -10 bis +150 °C ergibt sich ein Bereich in der skizzierten Größenordnung.

Der Bereich (12) zeigt das Sensorsignal bei Anwesenheit von Gas in verschiedenen Konzentrationen, die jedoch kleiner als eine gewählte Konzentration sind, die z. B. mit 800 ppm bestimmt werden kann.

Der Bereich (13) wird erreicht werden, wenn eine Gaskonzentration von größer der gewählten Konzentration - im Beispiel 800 ppm - erreicht wird. Die hier vorgestellte Erfindung schlägt vor, mit Hilfe einer zeitdynamischen Betrachtung des Sensor-Ausgangssignals den Einfluß oben erwähnter Randpara-meter zu begrenzen und trotzdem ein zuverlässiges Schaltsignal zu erzeugen, wenn eine Konzentration von etwa 800 ppm überschritten wird.

Dabei macht sich die Erfindung zu nutze, daß im Normalfall keinerlei Zielgas vorhanden ist. Demzufolge wird zugelassen, daß sich das Sensorsignal am Ausgang des Infrarot-Sensors (6) in der Zone 11 des Bereiches nach Figur 3 befindet.

Bei Nichtauftreten von Gas wird sich das Sensorausgangssignal in Abhängigkeit von äußeren Einflüssen innerhalb dieses Bereiches ändern. Dabei ist typisch - und für die Überlegungen im Rahmen dieser Erfindung ausschlaggebend - daß die Änderungsbeträge über die Zeit verhältnismäßig klein sind. Tritt dagegen plötzlich eine Konzentration des Zielgases auf - z. B. aufgrund eines Lecks oder eines technischen Defekts - ändert sich das Sensorsignal signifikant. Daraus läßt sich eine Regel ableiten:

Immer dann, wenn der Gradient größer ist als ein vorgegebener Wert, ist dies auf eine sich aufbauende Gaskonzentration im Meßraum zurückzuführen und ist ein Auslösekriterium für den Alarm.

Da die Meßstrecke selbstverständlich nicht offen ist, sondern einen Diffusionsbegrenzer in Form von einer oder mehreren Öffnungen gegenüber der Umgebung aufweist, wird selbst bei schlagartiger Freisetzung des Methan niemals sofort der gesamte Meßraum mit Methan gefüllt sein. Vielmehr dauert die Befüllung eine gewisse Zeit in Abhängigkeit von dem Druck und der Temperatur sowie der Fläche der Eintrittsöffnung.

Wird unterstellt, daß das Auftreten von nennenswerten Konzentrationen des Zielgases die Ausnahme ist, wird der relative Sprung des Ausgangspegels bezogen auf den rechnerischen Durchschnittspegel ein sicheres Indiz für das Vorhandensein einer definierten Konzentration des Zielgases sein.

Im einzelnen wird erfindungsgemäß vorgeschlagen wie folgt zu verfahren:

In zeitlichen beliebigen Abständen, z. B. im Abstand von je 1 Minute, wird die Infrarotquelle, die in der Praxis eine Glühlampe mit Quarzkolben sein wird, für eine Zeit eingeschaltet, die ausreicht, um den Glühfaden auf seine volle Emissionsleistung zu bringen.

Anschließend wird die Lampe wieder ausgeschaltet. Dieser Strahlungsimpuls wird nach Durcheilen der Meßkammer von der Infrarot-Sensoranordnung empfangen und in ein elektrisches Signal umgesetzt.

Die Größe des Signals ist ein Maß für die Dämpfung, die die Infrarotstrahlung in der Meßkammer durch das Zielgas erfahren kann. Das Ausgangssignal wird in eine zentrale Steuereinheit eingelesen, die z. B. von einem Mikroprozessor gebildet werden kann. Wenn unterstellt wird, daß durch natürliche Ereignisse sich das Ausgangssignal im Verlaufe von einigen Stunden ändern könnte, wird erfindungsgemäß vorgeschlagen,

3

aus den jeweils letzten z. B. 60 Meßwerten den aritmethischen Mittelwert zu bilden und das jeweils aktuelle Meßsignal in rechnerische Beziehung zu dem vorstehend beschriebenen Signal zu setzen. In der bevorzugten Ausführung wird das aktuelle Signal vom gemittelten Signal substrahiert.

Es ergeben sich folgende mathematische Ausdrücke:

$$S = S_{AKT} - \tilde{\jmath} \quad \text{oder} \quad S = S_{AKT} / \tilde{\jmath}$$

$$\tilde{\jmath} = \frac{1}{x} \sum_{n-x}^{n} S_n \quad \text{mit z.B. } x = 60$$

Der Mikroprozessor ist so programmiert, daß er das jeweils aktuelle Signal neu in die Mittelwertbildung hineinnimmt und dafür das jeweils älteste Signal des Meßzyklus aus der Berechnung herausnimmt.

Selbstverständlich ist vom Prinzip her jede beliebige Menge von Meßwerten für die Mittelwertbildung möglich, genauso wie der zeitliche Abstand der einzelnen Messungen voneinander letztlich nach praktischen Gesichtspunkten nahezu beliebig gewählt werden kann.

Selbstverständlich sind Situationen denkbar, bei denen sehr schleichend eine explosionsgefährliche Gaskonzentration entsteht. Wenn sich die Bildung dieser Gaskonzentration zeitlich langsamer als die Mittelwertbildung eingesetzte Zeit aufbaut, leuchtet ein, daß sich in diesem Sonderfall niemals eine Differenzbildung im vorbeschriebenen Sinne ergeben wird, die das Schaltkriterium erfüllt.

In diesem Fall ist das Rechenprogramm so ausgelegt, daß bei einer stetigen Abnahme des Sensorsignals der Mikroprozessor die sich ergebene Kurve extrapoliert (Trendberechnung) und dann, wenn der ermittelte Trend über eine frei definierbare Zeit nachgewiesen werden kann ein zweites Alarmkriterium auslöst.

Das zweite Alarmkriterium kann mathematisch beschrieben werden wie folgt:

$$S_{TREND} = S_{AKT} - \int_{t_b}^{t_a} \frac{\Delta S}{\Delta t} dt \qquad \begin{array}{l} \text{Alarm:} \\ \text{falls innerhalb} \\ \Delta t = t_a - t_b \Rightarrow S \leq S_{TREND} \end{array}$$

Ein drittes Alarmkriterium muß für den Fall eingefügt werden, daß der Ausgangspegel des Infrarot-Sensors einen bestimmten Wert unterschreitet und sich in der Zone (13) befindet. Tritt dieser Fall ein, bestehen grundsätzlich für die Ursache nur 2 Möglichkeiten:

Durch eine extrem langsame Entwicklung eines Methangaspegels, die in ihrer Entwicklung nicht stetig genug war um das vorstehend beschriebene Trendschaltkriterium auszulösen, wird die Meßkammer mit Methan gefüllt und absorbiert die Infrarot-Strahlung nachhaltig

Die andere Möglichkeit wäre eine wie immer geartete Minderleistung der Strahlungsquelle, z.B. aufgrund verbrauchter Batterien, einer verschmutzten Lichtquelle oder verschmutzter Filter. Auch eine Minderleistung des Infrarot-Detektors wäre denkbar. Da derartige Defekte auf jeden Fall zu einer Minderfunktion oder sogar eines Funktionsausfalls führen, wird durch die vorgeschlagene Maßnahme auf jeden Fall erreicht, daß sich das System im sicheren Zustand befindet und keinesfalls unbemerkt eine nicht vorhandene Sicherheit vorspiegelt. Aus dem Gesagten folgt, daß ein zu Detektionszwecken geeigneter, kostengünstiger Sensoranordnung zur Detektierung des Pegels von z.B. 1/3 der Explosionsgrenze aufgebaut werden kann, wenn das Ausgangssignal des Infrarot-Detektors elektronisch aufbereitet wird.

Insofern beansprucht die Erfindung den Gedanken, zusammen mit dem bekannten Prinzip der Infrarot Absorptionsanalyse mit einer elektronischen Schaltung einen Mittelwert zu bilden, eine Trendanalyse zu berechnen und einen Grenzwert zu überwachen, aus jeden der genannten Verfahrensschritte kann ein Alarmsignal generiert werden.

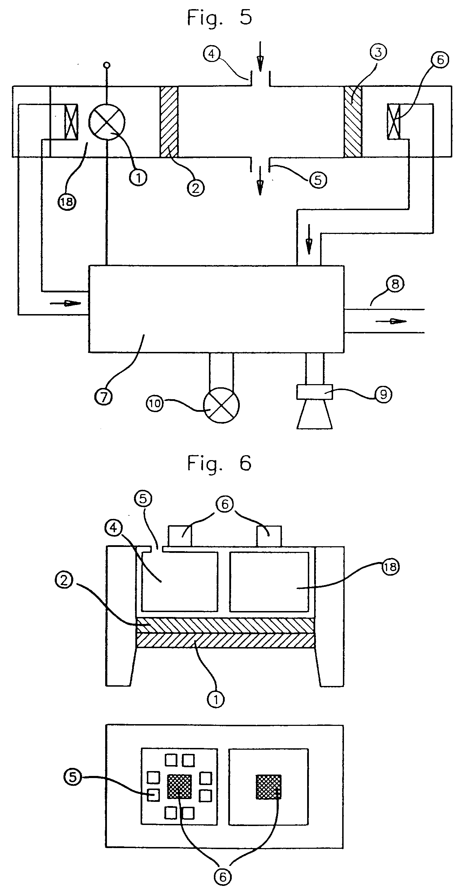

Um eine höhere Meßgenauigkeit zu erreichen wird weiter vorgeschlagen, das an sich bekannte Verfahren mit einer Referenz-Meßstrecke in den vorstehend beschriebenen Gedankenansatz zu integrieren. Die Erfindung benutzt dabei die Tatsache, daß Infrarot-Detektoren zwischenzeitlich in verschiedensten Technologien außerordentlich preiswert angeboten werden. Insofern wird eine Anordnung nach Figur 5 vorgeschlagen. Die Infrarotquelle 1 strahlt dabei durch 2 optische Filter durch eine Meßstrecke hindurch, die vom Zielgas erreicht werden kann. In die andere Richtung strahlt die gleiche Quelle durch einen hermetisch geschlossenen Raum, der nicht vom Zielgas erreicht werden kann. Ansonsten ist die technische Ausführung identisch.

Während der Zeit, in der die Infrarotquelle ausgeschaltet ist, wird vom zentralen Mikrocomputer die Sensorspannung bei beiden Infrarot-Sensoren festgestellt. Dazu werden elektrische Signale nach Analog-Digitalwandlung in den Mikrocomputer eingelesen. Die sich ergebenden Signale resultieren im wesentlichen aus der Wärmestrahlung der Umgebung, die über die Gehäusedie Sensoren erreicht.

Bei eingeschalteter Lichtquelle wird ebenfalls das empfangene Signal der beiden Infrarot-Sensoren miteinander verglichen.

Nunmehr wird die Differenz der beiden Signale gebildet, die dann ein Maß für die Anwesenheit des Zielgases in der Meßkammer ist und wobei evtl. Alterungseinflüsse insbesondere der Infrarotquelle oder eine gewisse Minderleistung aufgrund sich ändernder Batteriespannung aufgefangen wird.

Das bereits eingangs erwähnte dritte Alarmkriterium, nämlich das Erreichen eines Grenzbereiches bzw. eines Grenzwertes, kann in der beschriebenen Anordnung deutlich präziser erfolgen und ist insofern bei manchen Anwendungen eine vorteilhafte Ergänzung.

In einer Weiterführung des erfindungsgemäßen Gedanken wird vorgeschlagen mit Hilfe bekannter Verfahrensschritte der Mikromechanik die Komponenten IR-Quelle (Q), IR-Filter (F), Gasraum (G), Referenzraum (R) und IR-Detektor (D) zu integrieren, vgl. schematische Zeichnung Figur 6. Die Reihenfolge der Komponenten kann variiert werden z. B.:

Q-F-G-R-D, Q-F-G-R-F-D, Q-G-R-F-D, d. h. je nach Güte der Selektivität können zwei oder nur ein IR-Filter integriert werden. Bei solchen Anordnungen erhöht sich die Meßsicherheit wesentlich, ohne daß dabei nennenswerte Kosten für den Referenz-Meßpfad entstehen.

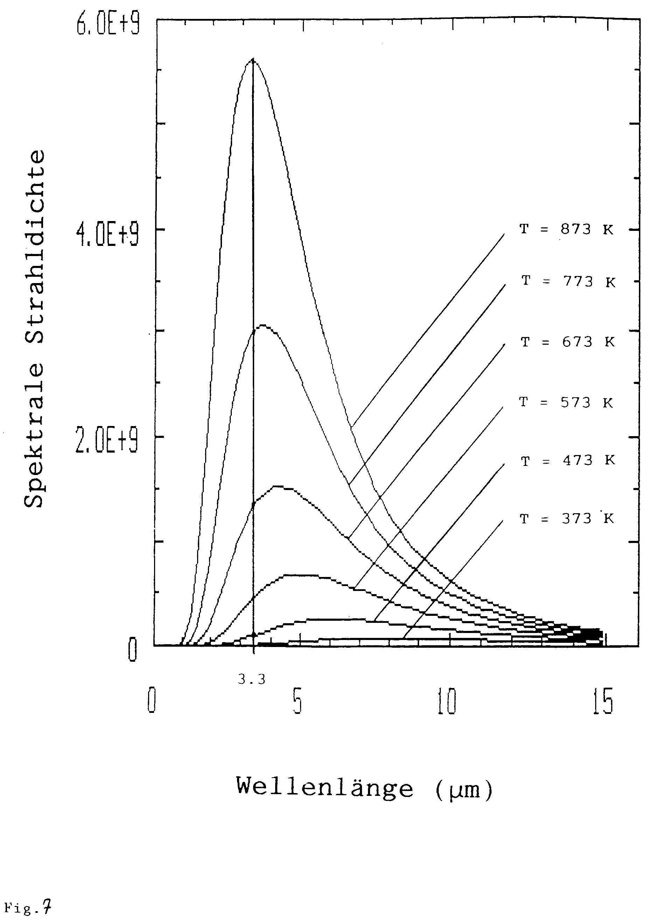

Die IR-Quelle besteht in einer erfindungsgemäßen Ausführung aus einer Polysiliziumschicht, die durch Stromdurchgang aktiv geheizt wird. Mit Hilfe des Plank'schen Strahlungsgesetz schwarzer Körper kann das Strahlprofil in Abhängigkeit von der Wellenlänge und der Temperatur dargestellt werden, vgl. Figur 7.

Man erkennt, daß Körper bei etwa 873 K ein Spektrum im Bereich von 1 $\mu$m bis etwa 15 $\mu$m abstrahlen, wobei das Maximum bei einer Wellenlänge von 3,3 $\mu$m liegt. Die Haupt-Absorptionslinie von Methan liegt bei 3,31 $\mu$m. Bei Temperaturen unter 873 K kann davon ausgegangen werden, daß bis etwa 473 K der 3,31 $\mu$m-Beitrag der Strahlung ausreichend ist (vgl. Figur 7), um einen Konzentrationsanstieg von 0 auf 1/10 der unteren Explosionsgrenze (5 %) sicher zu detektieren, falls eine geeignet empfindliche Auswertung der elektrischen Signale erfolgt.

In einer weiteren Ausgestaltung der Erfindung wird vorteilhaft erreicht, daß das erfindungsgemäße Gerät frei ist von Einflüssen, die aus statischer Wärmestrahlung kommen. Es wurde gefunden, daß der Wärmesensor stets die Wärmeleistung aus verschidenen Wärmequellen (Infrarot-Quellen) addiert.

Weil stets eine gewisse Infrarotleistung im Hintergrund vorhanden ist, detektiert auch bei ausgeschalteter Strahlungsquelle der Infrarot-Sensor stets Signale. Die Intensität dieser Signale ist von externen, nicht vorhersehbaren Einflüssen wie Sonneneinstrahlung, Infrarot-Abstrahlung von Heizungen, Maschinen etc. abhängig.

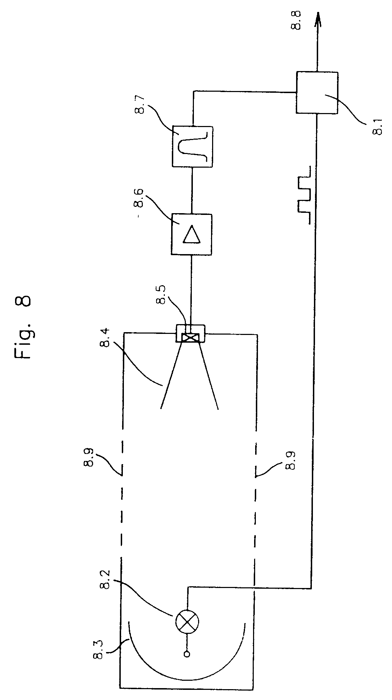

Erfindungsgemäß wird vorgeschlagen wie in Fig. 8 ausgeführt.

Dabei ist :

8.1 = zentrale Steuer- und Auswerteeinheit, in der bevorzugten Lösung ein Mikroprozessor

8.2 = Strahlungsquelle. In der bevorzugten Ausführung ein elektrisches Lämpchen.

8.3 = Hohlspiegel zu Bündelung der Strahlungsenergie.

8.4 = Empfangsspiegel zu Focussierung der Empfangsenergie auf den IR-Sensor.

8.5 = IR-Sensor, bevorzugt ein Thermopile oder pyroelektrischer mit vorgeschaltetem optischen Filter für die Absobtionswellenllänge des Zielgases, bei Methan also 3.31 um.

8.6 = Analoger Signalverstärker

8.7 = Schmalbandiges Filter. Die Filterfrequenz entspricht der Impulsfrequenz, mit der die Strahlungsquelle gepulst wird.

8.8 = Ausgang für Alarm, Meßwerte etc.

8.9 = Filter gegen Aerosole und Stäube

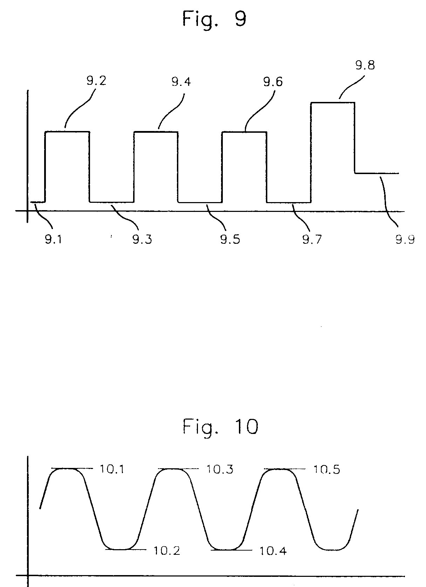

Es wird deutlich, daß die Strahlungsquelle in dieser Anordnung nicht gleichförmig betrieben wird, sondern mit einer bestimmten Frequenz gepulst wird. Damit ergibt sich am IR-Sensor (8.5) ein elektrischer Signalverlauf, wie in Fig. 9 beschrieben. Es ist erkennbar, daß das Signal niemals absolut die Null-Linie erreicht. Im Impuls 9.9 wird dargestellt, daß eine externe Infrarotquelle den Grundwert erheblich verschiebt.

Ohne absorbierendes Gas entspricht der Signal-Hub zwischen

(Strahlungsquelle ist AUS) Minimum und

(Strahlungsquelle ist AN) Maximum einer Skala von 100%.

Betrachtet wird erfindungsgemäß niemals der absolute Signalpegel, sondern stets der Signalhub zwischen Min. und Max. zweier aufeinander folgender Pegelsprünge. Das Programm bildet nunmehr Differenzwerte aus den in Fig. 9 erkennbaren Impulsen wie folgt:

$\Delta$ 1 = Betrag von (9.1 - 9.2)
$\Delta$ 2 = Betrag von (9.2 - 9.3)
$\Delta$ 3 = Betrag von (9.3 - 9.4)
$\Delta$ 4 = Betrag von (9.4 - 9.5)
$\Delta$ 5 = Betrag von (9.,5 - 9.6) usw.

Die Mittelwertbildung wird demnach gebildet aus diesen so ermittelten Differenzialsprüngen:

$$\Delta_M = \frac{\Delta_1 + \Delta_2 + \Delta_3 + \Delta_4 + \Delta_5 \ldots \Delta_n}{n}$$

Dieser Mittelwert $\Delta$ M entspricht also demjenigen Signalhub, der stets dann ermittelt wird, wenn kein Zielgas IR-Anteile absorbiert.

Erfindungsgemäß wird über einen Zeitraum gemittelt, der kleiner ist als die üblichen natürlichen Drifterscheinungen, z.B. aus dem Tag-Nacht-Zyklus.

Es hat sich ein Zeitraum von etwa 1 Stunde bewährt. Dabei wird die Strahlungsquelle etwa mit 10/min. gepulst. Diese Parameter können im Grunde beliebig gewählt werden.

Das aktuelle Sensorsignal A wird vom Programm nunmehr mit dem gemittelten Signal verglichen:

$$\Delta_V = \frac{\Delta_A \text{ (aktuelles Differenzsignal)}}{\Delta_M \text{ (gemitteltes Differenzsignal)}}$$

Wird das Vergleichssignal ($\Delta$V) kleiner als ein frei bestimmter Wert, z.B. 0.98, ist ein durch Absorbtion verminderter Differenzpegel erkannt, was auf das Vorhandensein einer Gaskonzentration zurückzuführen ist. Es wird ein Alarm ausgelöst.

Im Alarmfall wird erfindungsgemäß vorgeschlagen, daß seitens des Programmes der Zeitraum erheblich verlängert wird, in dem der Mittelwert gebildet wird. In der bevorzugten Ausführung wird die Anzahl der zu mittelnden Einzelwerte z.B. um den Faktor 10 erhöht. Vorteilhaft wird dadurch ereicht, daß der Mittelwert erheblich repräsentativer als Standardwert gelten kann. Das System wird sozusagen "ruhiger".

Sobald as Verhältnis wieder größer als der eingestellte Wert (z.B. 0.98) wird, wird der Alarm aufgehoben.

Aus Gründen des Energieeinsatzes ist es wünschenswert, die von der Strahlungsquelle abgestrahlte und damit verbrauchte elektrische Energie so klein wie möglich zu halten. Es wurde beobachtet, daß damit die Spannung am Ausgang des Thermoelementes (IR-Sensors) so klein wird, daß nur mit hohem Aufwand eine einwandfreie Signalverarbeitung gewährleistet ist. Insbesondere die Drift und das Rauschen aller Bauteile machen eine Beurteilung des Signales sehr schwer und nahezu unmöglich.

Wird das Sensorsignal am Ausgang des Verstärkers (8.6) jedoch über einen schmalbandigen Bandpaß geleitet, dessen Durchlaßfrequenz der Taktfrequenz der Strahlungsquelle entspricht, wird das Signal/Rausch-Verhältnis signifikant verbessert.

Der Bandpaß kann erfindungsgemäß als analoger oder digitaler Filter in der analogen Signalstrecke ausgeführt sein oder als rechnerischer Filter in der numerischen Signalverarbeitung in der zentralen Auswerteeinheit (9.1).

Durch Einsatz dieses Filters formen sich aus den EIN/AUS-Impulsen Sinussignale. Die Differenzbildung erfolgt sinngemäß wie vorstehend beschrieben. Jedoch wird der jeweilige Spitzenwert detektiert (Fig. 10).

In der Figur 8 ist ein Spiegelsystem (8.3) beschrieben, welches die Strahlungsenergie bündelt und insofern für eine Verbesserung des Signal/Rauschabstandes verantwortlich ist. Es liegt auf der Hand, daß dieses Spiegelsystem gefaltet werden kann, um die räumlichen Abmessungen des Systems kleiner zu gestalten.

Immerhin wird die notwendige Länge des durchstrahlten, eventuell gasgefüllten Raumes zwischen 150-300 mm sein, was durch Faltung um einen erheblichen Faktor verkleinert wird.

Aerosole und Stäube können im Dauereinsatz das optische System beschädigen oder unbrauchbar machen. Daher wird für die technische Ausgestaltung der Erfindung vorgeschlagen, den Zutritt der Aerosole und Stäube in das System durch einen Filter abzusperren.

In Frage käme ein Fließstoff-Filter als Staubfilter und ein Aktivkohlefilter als Aerosol-Filter. Die meisten leichten Gase, w.B. Methan, passieren ein Filter o.a. Art ohne großen Zeitverlust. Die o.a. Anordnung schützt vorteilhaft vor lebensverkürzender Beschädigung der optischen Systeme, ohne daß der Gaszutritt nachhaltig gestört wird (Fig. 8.9).

Es ist bekannt, daß Spiegeloberflächen mit sogenannten Echelette-Strukturen Interferenzeffekte bilden und insofern das Spektrum des gespiegelten Lichtes zerlegen. An einer bestimmten Posistion auf der Empfängerseite wird daher nur Strahlung einer zugeordneten Wellenlänge auftreten. Derartige Spiegelsysteme machen optische Filter überflüssig. Es wird daher vorgeschlagen, in einer Ausführung des erfindungsgemäßen Sensorsystems die Auftrennung des von der Strahlungsquelle abgstrahlten Spektrums mit Hilfe eines Speigelsystems vorzunehmen, dessen Oberfläche eine Echelette-Struktur aufweist.

In einer weiteren Ausgestaltung erhält die erfindungsgemäße Einrichtung einen Stromspeicher, z.B. einen Akkumulator, um den Betrieb der Einrichtung auch bei Netzausfall aufrechterhalten zu können. Bei Netzausfall muß es daher nicht automatisch zu einem Alarm kommen, der den Ausfall der Überwachungseinrichtung signalisiert. Vielmehr wird ein den Netzausfall signalisierender Alarm dann gegeben, wenn nach einer bestimmten Zeit die Netzversorung noch nicht wieder hergestellt ist. In einer Variante wird von der zentralen Steuer- und Auswerteeinheit die Spannung des Akkumulators überwacht. Der Ausfallalarm wird in diesem Fall dann gegeben, wenn eine festgelegte Mindestspannung unterschritten ist. Vorteilhaft wird durch diese Maßnahme erreicht, daß eine externe Alarmzentrale zwar jederzeit Alarm- und Fehlermeldungen erhält, diese jedoch sich auf tatsächliche Geräteausfälle oder auf längerfristige Stromausfälle beziehen.

In einer weitere Ausformung wird erfindungsgemäß vorgeschlagen, daß die zentrale Steuer- und Auswerteeinheit den Pegel des IR-Detektors derart überwacht, daß bei Ausbleiben des durch Ein- und Ausschalten der IR-Strahlungsquelle verursachten Pegelsprunges ein Fehleralarm ausgelöst wird.

Als Ursachen für dieses Ausbleiben käme sowohl ein Versagen der IR-Quelle, des IR-Detektors, des Signalverstärkers oder der allg. Stromversorgung oder eine erhebliche Verschmutzung der optischen Systeme in Frage. Es versteht sich von selbst, daß die zentrale Steuer- und Auswerteeinheit als Mikroprozessor ausgebildet ist, die ihrerseits über eine als WATCH-DOG bekannte Schaltung überwacht wird, so daß auch ein Ausfall des Mikroprozessors als Fehlermeldung weitergeleitet wird. Vorteilhaft erreicht die Erfindung damit einen Sensor, der sich selbst überwacht.

**Patentansprüche**

1. Verfahren und Vorrichtung zur selektiven Detektion von Gasen, insbesondere von brennbaren und explosiven Gasen wie z.B. Methan, Butan, Propan oder Kohlenmonoxid,
   wobei der Nachweis des zu detektierenden Gases auf der Eigenschaft mehratomiger Gase beruht, Lichtquanten mit Energien im Infrarotbereich zu absorbieren,
   wobei eine breitbandige Infrarot(licht)quelle (Fig. 1.1) einen schmalbandigen Infrarotfilter (1.2) durchstrahlt und somit ein geeigneter Spektralbereich zur Verfügung steht, der durch eine Meßstrecke gestrahlt wird, in die das Gas ein- und austreten kann. (1.4/5),
   wobei der Infrarotfilter auch am Ende der Meßgasstrecke (1.3) vorhanden sein kann, so daß ohne weiteres ein breitbandiger Infrarotdetektor (1.6) verwendet werden kann,
   wobei die Komponenten IR-Quelle, IR-Filter, Gasmeßstrecke, IR-Detektor, optische Spiegelsysteme mittels Methoden der Mikromechanik integriert werden können,
   wobei eine zentrale elektrische Steuer- und Auswerteeinheit (1.7) vorzugsweise ein Mikroprozessor, den Schaltausgang (1.8), die akustischen und optischen Alarmgeber (1.8 + 10) ansteuert und die Signale des IR-Detektors (1.6) auswertet,
   dadurch gekennzeichnet,
   daß in der zentralen Steuer und Auswerteeinheit (1.7) das Signal des IR-Detektors (1.6) über eine bestimmte Zeit gemittelt wird und dieser Mittelwert kontinuierlich aus den aktuellen Sensorsignalen neu gebildet wird und mit dem jeweils aktuellen Signalen des IR-Detektors verglichen wird, wobei dann ein Alarm ausgelöst wird, wenn der aktuelle Wert sich vom Mittelwert größer als ein bestimmter Betrag, bzw. ein bestimmtes Verhältnis unterscheidet.

2. Apparat und Verfahren nach Anspruch 1, dadurch gekennzeichnet,
   daß ein Voralarm dan ausgelöst wird, wenn sich das aktuelle Signal des IR-Sensors in mehr als einer bestimmten Anzahl von Messungen vom Mittelwert unterscheidet, ohne jedoch die Alarmgrenze nach Anspruch 1 zu erreichen.

3.  Apparat und Verfahren nach Anspruch 1, dadurch gekennzeichnet,
    daß der unmittelbar nach der Inbetriebnahme gebildete Mittelwert im Speicher der zentralen Steuer- und Auswerteeinheit abgelegt wird und im weiteren Betrieb des Sensors jeweils mit dem aktuell errechneten Mittelwert verglichen wird, wobei eine Fehlermeldung dann ausgelöst wird, wenn der aktuelle Mittelwert sich vom ursprünglichen Mittelwert um einen bestimmten Betrag bzw. Faktor unterscheidet.

4.  Apparat und Verfahren nach mindestens einem der vorangegangenen Ansprüchen, dadurch gekennzeichnet,
    daß nach Figur 8 die IR-Quelle (8.2) von der zentralen Steuer- und Auswerteeinheit (8.1) periodisch ein- und ausgeschaltet wird, wobei das vom Infrarot-Detektor (8.5) empfangene Signal von der zentralen Steuer- und Auswerteeinheit so ausgewertet wird, daß entsprechend Figur 9 jeweils der Betrag des Pegelsprunges oder Differenzbetrages (z.B. 9.1 nach 9.2, bzw. 9.2 nach 9.3) ermittelt wird und über eine bestimmte Anzahl von Meßzyklen gemittelt werden und daß die zentrale Steuer- und Auswerteeinheit den jeweils aktuellen Differenzbetrag ($\Delta$ X) mit dem gemittelten Differenzbetrag ($\Delta$ M) vergleicht und einen Alarm dann auslöst, wenn der Vergleichswert einen bestimmten Betrag überschreitet.

5.  Apparat und Verfahren nach mindestens einem der vorangeganenen Ansprüche, dadurch gekennzeichnet,
    daß das vom IR-Sensor (8.5) abgegebene Signal über ein Frequenzfilter (8.7) geführt wird, dessen Mittenfrequenz mit der Taktrate übereinstimmt, mit der die IR-Quelle (8.2) ein- und ausgeschaltet wird.

6.  Apparat und Verfahren nach Anspruch 5, dadurch gekennzeichnet,
    daß das Frequenzfilter (8.7) entweder als analogtechnische Baugruppe im Signalpfad hinter dem IR-Detektor ausgeführt ist oder mathematisch bei der Signalverarbeitung innerhalb der zentralen Steuer- und Auswerteeinheit nachgebildet ist.

7.  Apparat und Verfahren nach mindestens einem der vorangegangenen Ansprüche, dadurch gekennzeichnet,
    daß die IR-Quelle (8.2) in der Nähe des Brennpunktes eines Hohlslpiegels (8.3) so angeordnet ist, daß sich eine Bündelung der IR-Strahlung in dem Punkt ergibt, in dem der IR-Detektor (8.5) sich befindet und daß vor dem IR-Detektor ein trichterförmiger verspiegelter Tubus (8.4) sich befindet, der jegliche einfallende Strahlung auf die sensitive Fläche des IR-Detektors focussiert.

8.  Apparat und Verfahren nach mindestens einem der vorangegangenen Ansprüche, dadurch gekennzeichnet,
    daß der Hohlspiegel (8.3) eine Echelette- Struktur derart aufweist, daß das Spektrum der IR-Quelle in seine Bestandteile zerlegt wird, wobei der IR-Detektor in seiner geometrischen Position zum Hohlspiegel so angeordnet ist, daß die einfallende Strahlungsenergie derjenigen Wellenlänge entspricht, auf der das zu detektierende Gas absorbiert wird.

9.  Apparat und Verfahren nach mindestens einem der vorangegangenem Ansprüchen, dadurch gekennzeichnet,
    daß der Gaszugang zum Innenraum des Apparates mit einem Filtermaterial verschlossen ist, welches das zu detektierende Gas durchläßt, allerdings Stäube und Aerosole zurückhält.

10. Apparat und Verfahren nach mindestens einem der vorangegangenen Ansprüche, dadurch gekennzeichnet,
    daß der Apparat einen elektrischen Stromspeicher, z.B. einen Akkumulator aufweist, der einen vorübergehenden Stromausfall puffern kann, wobei nach Ablauf einer bestimmten Zeit ein den Ausfall des Stromnetzes signalisierender Alarm ausgelöst wird.

11. Apparat und Verfahren nach Anspruch 11, dadurch gekennzeichnet,
    daß ein den Ausfall des Stromnetzes signalisierender Alarm dann ausgelöst wird, wenn die Spannung des zur Pufferung eingesetzten Akkumulators einen bestimmten Mindestwert unterschreitet.

12. Apparat und Verfahren nach mindestens einem der vorangegangenen Ansprüchen, dadurch gekennzeichnet,
daß über Umlenkspiegel die wünschenswerte optische Länge der Absorbtionsstrecke durch Faltung der otptischen Strecke erreicht wird.

Fig. 1

Fig. 2

Fig. 3

Fig. 4

EP 0 616 207 A2

Fig. 5

Fig. 6

Fig.7

Fig. 8

Fig. 9

Fig. 10